(19) Europäisches Patentamt / European Patent Office / Office européen des brevets

(11) **EP 3 521 016 B1**

(12) **EUROPEAN PATENT SPECIFICATION**

(45) Date of publication and mention
of the grant of the patent:
**18.03.2020 Bulletin 2020/12**

(21) Application number: **17856215.3**

(22) Date of filing: **27.09.2017**

(51) Int Cl.:
*B32B 27/00* (2006.01)     *B32B 27/32* (2006.01)
*C09J 7/00* (2018.01)     *C08J 3/24* (2006.01)
*C08J 7/04* (2020.01)

(86) International application number:
**PCT/JP2017/034946**

(87) International publication number:
**WO 2018/062266 (05.04.2018 Gazette 2018/14)**

(54) **MOLD RELEASE SHEET**

FORMTRENNFOLIE

FEUILLE DE DÉMOULAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2016 JP 2016194012**

(43) Date of publication of application:
**07.08.2019 Bulletin 2019/32**

(73) Proprietor: **Unitika, Ltd.
Amagasaki-shi, Hyogo 660-0824 (JP)**

(72) Inventors:
• **TSUBOTA Masayuki
Uji-shi
Kyoto 611-0021 (JP)**

• **NODA Atsuko
Uji-shi
Kyoto 611-0021 (JP)**

(74) Representative: **Vigand, Philippe et al
Novagraaf International SA
Chemin de l'Echo 3
1213 Onex - Genève (CH)**

(56) References cited:
EP-A1- 2 944 463        WO-A1-2010/023907
WO-A1-2017/135423       JP-A- 2011 005 856
JP-A- 2012 040 707       JP-A- 2013 099 907
JP-A- 2013 099 907       JP-A- 2013 184 461
JP-A- 2015 189 014

**Description**

Technical Field

The present invention relates to a mold release sheet which includes a semi-aromatic polyamide resin film and a resin layer, and which is excellent in releasability even if exposed to high temperatures.

Background Art

Mold release sheets are widely used in the industrial field, and can be specifically applied to process materials for manufacturing printed wiring boards, flexible printed wiring boards, multi-layer printed wiring boards, and the like, pressure-sensitive adhesive materials, protection materials such as components for liquid crystal displays, and molding materials for sheet-like structures such as ion-exchange membranes and ceramic green sheets.

In recent years, the wiring boards and the components have been manufactured through an increased number of high-temperature processing steps according to reductions in size and weight. The process materials and the protection materials may accordingly undergo high-temperature processing steps and then be released, with being attached to components and the like. Such materials may also be released after being stored as protection films for pressure-sensitive adhesive materials under a high-temperature environment at about 50°C for a long period.

For example, a release film disclosed in Patent Literature 1 includes a polyethylene terephthalate film as a substrate, and cannot be used in a processing step conducted at higher than 200°C, such as a reflow soldering step, because heat resistance of the substrate is insufficient.

Patent Literature 2 discloses a heat-resistant release film including a polyimide film having heat resistance, as a substrate. A polyimide film has high heat resistance among polymer films and can be used as a substrate of a mold release sheet even if processed at high temperatures, but unfortunately has the problem of being expensive. The release film in Patent Literature 2 includes a release layer containing a silicone compound, and therefore is not suitable as a release film for pressure-sensitive adhesive materials because, when used in a high-temperature region, causes decomposition of the silicone compound and thus transferring of low-molecular weight silicone to an adherend, resulting in a reduction in pressure-sensitive adhesiveness (residual adhesion rate) after releasing, in the case of an adherend like a pressure-sensitive adhesive material.

Citation List

Patent Literature

  Patent Literature 1: International Publication No. WO 2009/025063
  Patent Literature 2: Japanese Patent Laid-Open No. 2014-091763

Summary of Invention

Technical Problem

An object of the present invention is to provide a mold release sheet which can solve such problems, which includes a substrate film being an inexpensive film replacing a polyimide film, which has favorable release performance even when used in a step conducted in a high-temperature region of at higher than 200°C, such as a reflow soldering step, and which can be released without any degradation of releasability and does not cause any contamination of an adherend surface after releasing even when stored as a protection film for pressure-sensitive adhesive materials under a high-temperature environment at about 50°C for a long period.

Solution to Problem

The present inventors have made studies in order to solve the above problems, and as a result, have found that the above problems can be solved by providing a resin layer containing an acid-modified polyolefin resin and a crosslinking agent at a specific composition, on a semi-aromatic polyamide resin film as defined in claim 1, thereby leading to the present invention.

That is, the summary of the present invention is as follows.

(1) A mold release sheet including a resin layer provided on a semi-aromatic polyamide resin film, wherein the semi-aromatic polyamide resin forming the semi-aromatic polyamide resin film is a resin formed from an aromatic dicarboxylic acid component and an aliphatic diamine component, and the resin layer contains an acid-modified polyolefin resin having a proportion of an acid-modified component of 2 to 6% by mass, and a crosslinking agent.

(2) The mold release sheet according to (1), wherein the content of the crosslinking agent per 100 parts by mass of the acid-modified polyolefin resin is 1 to 50 parts by mass.

(3) The mold release sheet according to one of (1) and (2), wherein the crosslinking agent is a carbodiimide group-containing compound and/or an oxazoline group-containing compound.

(4) The mold release sheet according to any one of (1) to (3), wherein the semi-aromatic polyamide resin not only includes a dicarboxylic acid component containing terephthalic acid as a main component, but also includes a diamine component containing an aliphatic diamine having 4 to 15 carbon atoms, as a main component.

(5) The mold release sheet according to (4), wherein the semi-aromatic polyamide resin is nylon 9T or nylon 10T.

(6) The mold release sheet according to any one of (1) to (5), wherein the resin layer further contains polyvinyl alcohol.

(7) The mold release sheet according to (6), wherein the content of the polyvinyl alcohol per 100 parts by mass of the acid-modified polyolefin resin is 5 parts by mass or more.

(8) The mold release sheet according to one of (6) and (7), wherein the polyvinyl alcohol has a degree of saponification of 99% or less.

Advantageous Effects of Invention

The mold release sheet of the present invention includes an inexpensive substrate film, has favorable releasability even when used in a high-temperature region of higher than 200°C, has favorable releasability even when stored under a high-temperature environment at about 50°C for a long period, and causes no contamination of an adherend surface after releasing and therefore allows a pressure-sensitive adhesive material attached as an adherend to be high in residual adhesion rate after releasing. Furthermore, the mold release sheet of the present invention also has a small effect on the environment when discarded, because a release agent having a halogen element such as fluorine is not used.

The mold release sheet of the present invention is suitable as a mold release sheet for use in a step in a high-temperature region, such as a reflow soldering step in manufacturing of a printed wiring board or the like.

Description of Embodiments

Hereinafter, the present invention will be described in detail.

The mold release sheet of the present invention includes a resin layer containing an acid-modified polyolefin resin and a crosslinking agent provided on a semi-aromatic polyamide resin film.

In the mold release sheet of the present invention, a semi-aromatic polyamide resin film is used as a substrate. The semi-aromatic polyamide resin forming the film is a resin which is formed from an aromatic dicarboxylic acid component and an aliphatic diamine component.

The aromatic dicarboxylic acid component preferably contains terephthalic acid as a main component, more preferably contains 60 mol% or more of terephthalic acid, further preferably 70 mol% or more of terephthalic acid, particularly preferably 85 mol% or more of terephthalic acid. When the content of terephthalic acid is less than 60 mol%, a film to be obtained is degraded in heat resistance and low water-absorption properties.

Examples of an aromatic dicarboxylic acid component other than terephthalic acid include isophthalic acid, and naphthalenedicarboxylic acid (1,2-form, 1,3-form, 1,4-form, 1,5-form, 1,6-form, 1,7-form, 1,8-form, 2,3-form, 2,6-form, and 2,7-form).

The aromatic dicarboxylic acid component may include other dicarboxylic acid as long as the effect of the present invention is not impaired. Examples of such other aromatic dicarboxylic acid component include aliphatic dicarboxylic acids such as oxalic acid, malonic acid, succinic acid, glutaric acid, adipic acid, sebacic acid, dodecanedioic acid, tetradecanedioic acid, and octadecanedioic acid.

The aliphatic diamine component preferably contains an aliphatic diamine having 4 to 15 carbon atoms, as a main component, more preferably contains an aliphatic diamine having 6 to 12 carbon atoms, as a main component, further preferably contains an aliphatic diamine having 9 to 12 carbon atoms, as a main component, particularly preferably contains an aliphatic diamine having 9 to 10 carbon atoms, as a main component.

The aliphatic diamine component preferably contains 60 mol% or more, more preferably 75 mol% or more, further preferably 90 mol% or more of an aliphatic diamine having 4 to 15 carbon atoms. When the content of the aliphatic diamine having 4 to 15 carbon atoms is 60 mol% or more, a film to be obtained can simultaneously satisfy heat resistance and productivity. Such aliphatic diamines having 4 to 15 carbon atoms may be used singly or in combinations of two or more thereof, provided that when two or more are used in combination, the content is defined as the total content of the two or more.

Examples of the aliphatic diamine having 4 to 15 carbon atoms include linear aliphatic diamines such as 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, and 1,15-pentadecanediamine, and branched aliphatic diamines such as 2-methyl-1,8-octanediamine, 4-methyl-1,8-octanediamine, 5-methyl-1,9-nonanediamine, 2,2,4-/2,4,4-trimethylhexamethylenediamine, 2-methyl-1,5-pentanediamine, 2-methyl-1,6-hexanediamine, and 2-methyl-1,7-heptanediamine.

The aliphatic diamine component may include other diamine as long as the effect of the present invention is not impaired. Examples of such other diamine include alicyclic diamines such as isophorone diamine, norbornanedimethylamine, and tricyclodecanedimethylamine, and aromatic diamines such as meta-xylylenediamine, para-xylylenediamine, meta-phenylenediamine, and para-phenylenediamine.

The semi-aromatic polyamide resin may be copolymerized with a lactam compound such as ε-caprolactam, ζ-enantholactam, η-capryllactam, or ω-laurolactam as long as the effect of the present invention is not impaired.

Specific examples of the semi-aromatic polyamide resin include nylon 4T, nylon 6T, nylon 9T, nylon 10T, nylon 11T, nylon 12T, nylon 6I, nylon 6/6T, nylon 6/6I, and nylon 6/6T/6I. Here, "T" represents terephthalic acid and "I" represents isophthalic acid. In particular, nylon 9T and nylon 10T are preferable from the viewpoint of close contact properties to an acid-modified component.

The semi-aromatic polyamide resin may include a polymerization catalyst and/or an end-capping agent. Examples of the end-capping agent include acetic acid, lauric acid, benzoic acid, octylamine, cyclohexylamine, and aniline. Examples of the polymerization catalyst include phosphoric acid, phosphorus acid, hypophosphorous acid, or a salt thereof.

The melting point (Tm) of the semi-aromatic polyamide resin is preferably 260°C or higher, more preferably 270 to 350°C. When the Tm of the semi-aromatic polyamide resin falls within the range, a semi-aromatic polyamide resin film to be obtained can be inhibited from being pyrolyzed (thermally degraded), and a mold release sheet to be obtained can be easily released even after a reflow soldering processing step in use as a process material of a printed board. The melting point of the semi-aromatic polyamide resin can be regulated within the above range by selection of raw materials and the composition.

The limiting viscosity of the semi-aromatic polyamide resin is preferably 0.8 to 2.0 dL/g, more preferably 0.9 to 1.8 dL/g. While the semi-aromatic polyamide resin, when having a limiting viscosity of 0.8 dL/g or more, can allow for production of a film excellent in mechanical strength, the semi-aromatic polyamide resin, when having a limiting viscosity of more than 2.0 dL/g, may cause production of a film to be difficult.

The semi-aromatic polyamide resin can be manufactured by using any method known as a method of manufacturing crystalline polyamide. Examples include a solution polymerization method or an interfacial polymerization method (A method) where an acid chloride and a diamine component are used as raw materials, a method where a dicarboxylic acid component and a diamine component are used as raw materials to produce a low polymer, and the low polymer is formed into a polymer by melt polymerization or solid-state polymerization (B method), a method where a dicarboxylic acid component and a diamine component are used as raw materials to produce a pulverized mixture of a salt and a low polymer, and the mixture is subjected to solid-state polymerization (C method), and a method where a dicarboxylic acid component and a diamine component are used as raw materials to produce a salt, and the salt is subjected to solid-state polymerization (D method). In particular, the C method and the D method are preferable, and the D method is more preferable. The C method and the D method can produce a pulverized mixture of a salt and a low polymer, and the salt, at a low temperature, and do not require a large amount of water in production of such a pulverized mixture of a salt and a low polymer, and such a salt, as compared with the B method. Therefore, generation of a gel-like product can be reduced, and fish eyes can be reduced.

In the B method, for example, the diamine component, the dicarboxylic acid component and a polymerization catalyst can be collectively mixed to prepare a nylon salt, and the salt can be subjected to heat polymerization at 200 to 250°C, thereby providing a low polymer. The limiting viscosity of the low polymer is preferably 0.1 to 0.6 dL/g. When the limiting viscosity of the low polymer falls within the range, an advantage is that the polymerization rate can be increased without any imbalance in molar between a carboxyl group in the dicarboxylic acid component and an amine group in the diamine component at subsequent solid-state polymerization and/or melt polymerization. When the limiting viscosity of the low polymer is less than 0.1 dL/g, the polymerization time may be elongated and productivity may be inferior. When the limiting viscosity is more than 0.6 dL/g, a semi-aromatic polyamide resin to be obtained may be colored.

Solid-state polymerization of the low polymer is preferably performed under reduced pressure or in an inert gas stream. The temperature of the solid-state polymerization is preferably 200 to 280°C. When the temperature of the solid-state polymerization falls within the range, a semi-aromatic polyamide resin to be obtained can be suppressed in coloration and gelation. When the temperature of the solid-state polymerization is lower than 200°C, the polymerization time may be elongated to result in inferior productivity. When the temperature is higher than 280°C, a semi-aromatic polyamide resin to be obtained may be colored or gelated.

Melt polymerization of the low polymer is preferably performed at a temperature of 350°C or less. When the polymerization temperature is higher than 350°C, decomposition and/or thermal degradation of the semi-aromatic polyamide resin may be promoted. Therefore, a film obtained from such a semi-aromatic polyamide resin may be inferior in strength and appearance. The melt polymerization also encompasses melt polymerization with a melt extruder.

In the C method, for example, a suspension including a molten aliphatic diamine and a solid aromatic dicarboxylic acid are stirred and mixed to produce a mixed liquid. The mixed liquid is then subjected to a production reaction of a salt by a reaction of an aromatic dicarboxylic acid and an aliphatic diamine and a production reaction of a low polymer by polymerization of the salt produced, at a temperature lower than the melting point of a semi-aromatic polyamide resin finally produced, thereby providing a mixture of the salt and the low polymer. In such a case, pulverizing may be performed with the reactions being allowed to run, or pulverizing may be performed after the reactions are conducted and the mixture is taken out once. The reaction product obtained is then formed into a high molecular weight product until a predetermined molecular weight is achieved, by solid-state polymerization at a temperature lower than the melting point of a semi-aromatic polyamide resin finally produced, thereby providing the semi-aromatic polyamide resin. The solid-state polymerization is preferably performed in a stream of an inert gas such as nitrogen at a polymerization temperature of 180 to 270°C for a reaction time of 0.5 to 10 hours.

In the D method, for example, an aromatic dicarboxylic acid powder is heated in advance to a temperature equal to or higher than the melting point of an aliphatic diamine and equal to or lower than the melting point of an aromatic dicarboxylic acid, and the aliphatic diamine is added to the aromatic dicarboxylic acid powder at the temperature without any water substantially contained so that such an aromatic dicarboxylic acid is kept in the form of a powder, thereby producing a salt. The salt obtained is formed into a high molecular weight product until a predetermined molecular weight is achieved, by solid-state polymerization at a temperature lower than the melting point of a semi-aromatic polyamide resin finally produced, thereby providing the semi-aromatic polyamide resin. The solid-state polymerization is preferably performed in a stream of an inert gas such as nitrogen at a polymerization temperature of 180 to 270°C for a reaction time of 0.5 to 10 hours.

A commercially available product can be suitably used as the semi-aromatic polyamide resin. Examples of such a commercially available product include "Genestar (registered trademark)" manufactured by Kuraray Co., Ltd., "XecoT (registered trademark)" manufactured by Unitika Ltd., "Reny (registered trademark)" manufactured by Mitsubishi Engineering-Plastics Corporation, "Arlen (registered trademark)" manufactured by Mitsui Chemicals, Inc., "Ultramid (registered trademark)" manufactured by BASF SE, and "Rilsan HT (registered trademark)" manufactured by Arkema S.A.

In the present invention, the semi-aromatic polyamide resin film is formed from the semi-aromatic polyamide resin, and the film may contain, if necessary, additive (s), for example, a lubricant, a pigment such as titanium, a colorant such as a dye, an anti-coloring agent, a thermal stabilizer, an antioxidant such as hindered phenol, phosphate, or phosphite, a weather resistance improver such as a benzotriazole-based compound, a flame retardant such as a bromine- or phosphorus-based flame retardant, a plasticizer, a release agent, a reinforcing agent such as talc, a modifier, an antistatic agent, an ultraviolet absorber, an antifogging agent, and various polymer resins, in order to more enhance various characteristics, as long as various characteristics of the film are not impaired.

Examples of a fine particle for a lubricant which improves slipping properties can include inorganic particles of silica, alumina, titanium dioxide, calcium carbonate, kaolin, and barium sulfate. Examples of an organic fine particle can include an acrylic resin particle, a melamine resin particle, a silicone resin particle, and a crosslinked polystyrene particle. The average particle size of such a fine particle can be selected within the range from 0.05 to 5.0 $\mu$m depending on friction properties, optical properties, and other requirement properties of the film.

The method of allowing the additive(s) to be contained in the semi-aromatic polyamide resin film can be any of various methods. Representative methods can include the following methods.

(i) A method where the additive(s) are added in providing of the semi-aromatic polyamide resin by polymerization
(ii) A master batch method where the additive(s) are directly added to the semi-aromatic polyamide resin to prepare a pellet melt-kneaded
(iii) A method where the additive(s) are directly added to the semi-aromatic polyamide resin in film formation and the resultant is melt-kneaded in an extruder
(iv) A method where the additive(s) are directly added into an extruder in film formation and the resultant is melt-kneaded

The raw materials of the semi-aromatic polyamide resin film may be each a virgin material mixture, or may be each an irregular film produced or a scrap mixture generated as an edge trimming, in manufacturing of the semi-aromatic polyamide resin film, or one prepared by adding a virgin material to the scrap mixture. Such mixing can be performed by a known method such as a method where dry blending is conducted by a known apparatus or a kneading method where melt-kneading and mixing are conducted with a single-screw or twin-screw extruder.

The surface of the semi-aromatic polyamide resin film may be subjected to a corona treatment, a plasma treatment, an acid treatment, a flame treatment, or the like in order that adhesiveness to the resin layer is improved.

Next, the resin layer will be described.

The resin layer provided on the semi-aromatic polyamide resin film contains an acid-modified polyolefin resin and a crosslinking agent.

The acid-modified polyolefin resin needs to have a proportion of an acid-modified component of 2 to 6% by mass, and the proportion is preferably 2 to 5% by mass. If the proportion of the acid-modified component is less than 2% by mass, the proportion of a polar group in the acid-modified polyolefin resin contained in the resin layer can be decreased, thereby imparting no sufficient close contact properties with the semi-aromatic polyamide resin film as a substrate, resulting in not only inferior releasability from an adherend, but also contamination of an adherend. When an adherend is a pressure-sensitive adhesive material, a reduction in residual adhesion rate may be caused. If the proportion of the acid-modified component is more than 6% by mass, heat resistance of the resin layer tends to be degraded to result in degradation of releasability from an adherend after a high-temperature treatment.

Examples of the acid-modified component forming the acid-modified polyolefin resin include an unsaturated carboxylic acid component. Examples of the unsaturated carboxylic acid component include not only acrylic acid, methacrylic acid, maleic acid, maleic anhydride, itaconic acid, itaconic anhydride, fumaric acid, and crotonic acid, but also unsaturated dicarboxylic acid half-esters and half-amides. In particular, acrylic acid, methacrylic acid, maleic acid, and maleic anhydride are preferable, and acrylic acid, methacrylic acid, and maleic anhydride are particularly preferable in terms of dispersion stability of the resin. Two or more such acid-modified components may be contained in the acid-modified polyolefin resin.

The acid-modified polyolefin resin may contain an ethylenically unsaturated component containing an oxygen atom in a side chain, from the viewpoint of an improvement in close contact properties with the substrate. Examples of the ethylenically unsaturated component containing an oxygen atom in a side chain include an esterified product of (meth)acrylic acid and an alcohol having 1 to 30 carbon atoms, and in particular, an esterified product of (meth)acrylic acid and an alcohol having 1 to 20 carbon atoms is preferable from the viewpoint of availability. Specific examples of such a component include methyl (meth)acrylate, ethyl (meth)acrylate, propyl (meth)acrylate, butyl (meth)acrylate, hexyl (meth)acrylate, octyl (meth)acrylate, decyl (meth)acrylate, lauryl (meth)acrylate, dodecyl (meth)acrylate, and stearyl (meth)acrylate. A mixture of such components may also be used. In particular, methyl (meth)acrylate, ethyl (meth)acrylate, butyl (meth)acrylate, hexyl acrylate, and octyl acrylate are more preferable, ethyl acrylate, and butyl acrylate are further preferable, and ethyl acrylate is particularly preferable, from the viewpoint of adhesiveness to a substrate film. The "... (meth)acrylate" means "... acrylate or methacrylate".

The ethylenically unsaturated component containing an oxygen atom in a side chain has a polar group in the molecule, as in the acid-modified component. Therefore, the ethylenically unsaturated component containing an oxygen atom in a side chain is contained in the acid-modified polyolefin resin, thereby enhancing close contact properties with the substrate, and on the other hand, a too large amount of the ethylenically unsaturated component containing an oxygen atom in a side chain can degrade releasability from an adherend. The proportion of the ethylenically unsaturated component containing an oxygen atom in a side chain contained in the acid-modified polyolefin resin is preferably 40% by mass or less, more preferably 35% by mass or less, further preferably 30% by mass or less, particularly preferably 18% by mass or less.

The acid-modified polyolefin resin is a resin which contains an olefin component as a main component and which is modified by the acid-modified component. The olefin component forming the acid-modified polyolefin resin is not particularly limited, and is preferably alkene having 2 to 6 carbon atoms, such as ethylene, propylene, isobutylene, 2-butene, 1-butene, 1-pentene, or 1-hexene. A mixture of such components may also be adopted. In particular, alkene having 2 to 4 carbon atoms, such as ethylene, propylene, isobutylene, or 1-butene is more preferable, and ethylene and propylene are further preferable. The olefin component of the acid-modified polyolefin resin is most preferably ethylene from the viewpoint of surface smoothness of the resin layer and releasability from an acrylic pressure-sensitive adhesive material. On the other hand, the olefin component of the acid-modified polyolefin resin is most preferably propylene from the viewpoint of releasability from an epoxy prepreg. The acid-modified polyolefin resin preferably has 50% by mass or more, more preferably 60% by mass or more, further preferably 90% by mass or more, particularly preferably 95% by mass or more of a propylene component, particularly from the viewpoint of releasability in a high-temperature region of 200°C or higher.

The acid-modified polyolefin resin for use in the present invention may be copolymerized with a small amount of other monomer. Examples of such a monomer include a diene component, (meth)acrylonitrile, a vinyl halide component, a vinylidene halide component, carbon monoxide, and sulfur dioxide.

Each component forming the acid-modified polyolefin resin may be copolymerized in the acid-modified polyolefin resin, and the form is not limited. Examples of the copolymerization state include random copolymerization, block copolymerization, and graft copolymerization (graft modification).

Examples of the acid-modified polyolefin resin which can be used in the present invention include commercial products such as Bondine series manufactured by Arkema S.A, Nucrel series manufactured by Du Pont-Mitsui Polychemicals Co., Ltd., Rexpearl series manufactured by Japan Polyethylene Corporation, Yumex series manufactured by Sanyo Chemical Industries, Ltd., Vestoplast series manufactured by Evonik Industries AG, Primacor series manufactured by The Dow Chemical Company, Admer series manufactured by Mitsui Chemicals, Inc., and Toyotac series manufactured by Toyobo Co., Ltd.

A crosslinking agent having self-crosslinking ability, a compound having a plurality of functional groups each reactive with a carboxyl group, in the molecule, or the like can be used as the crosslinking agent contained in the resin layer, and, in particular, an isocyanate compound, a melamine compound, a urea compound, an epoxy compound, a carbodiimide group-containing compound, and an oxazoline group-containing compound are preferable, and in particular, a carbodiimide group-containing compound and an oxazoline group-containing compound are effective. Such crosslinking agents may be used in combination. The resin layer can contain the crosslinking agent, thereby resulting in further enhancements in various performances such as an aggregation force and water resistance. The content of the crosslinking agent is preferably 1 to 50 parts by mass, more preferably 2 to 40 parts by mass, further preferably 2 to 30 parts by mass per 100 parts by mass of the acid-modified polyolefin resin. If the content of the crosslinking agent is less than 1 part by mass, the resin layer tends to be decreased in the aggregation force, the resin layer tends to be easily transferred to an adherend, and the residual adhesion rate tends to be reduced. If the content is more than 50 parts by mass, any reaction may be caused between the resin layer and an adherend, resulting in inferior releasability.

The carbodiimide group-containing compound is not particularly limited as long as the compound has one or more carbodiimide groups in the molecule. One carbodiimide moiety of the carbodiimide group-containing compound reacts with two carboxyl groups in an acid-modified moiety of the acid-modified polyolefin resin, thereby allowing crosslinking to be achieved. Specific examples of the carbodiimide group-containing compound include compounds having a carbodiimide group, such as p-phenylene-bis(2,6-xylylcarbodiimide), tetramethylene-bis(t-butylcarbodiimide), and cyclohexane-1,4-bis(methylene-t-butylcarbodiimide), as well as polycarbodiimide being a polymer having a carbodiimide group. Such compounds can be used singly or in combinations of two or more thereof. In particular, polycarbodiimide is preferable in terms of handleability.

Examples of a commercially available product of the polycarbodiimide include Carbodilite series manufactured by Nisshinbo Chemical Inc. With being described with reference to trade names, more specific examples include water-soluble types "SV-02", "V-02", "V-02-L2", and "V-04"; emulsion types "E-01" and "E-02"; organic solution types "V-01", "V-03", "V-07", and "V-09"; and solvent-free type "V-05".

The oxazoline group-containing compound is not particularly limited as long as the compound has two or more oxazoline groups in the molecule. Each of two oxazoline moieties of the oxazoline group-containing compound forms an amide ester, together with one carboxyl group in the acid-modified moiety of the acid-modified polyolefin resin, thereby allowing crosslinking to be achieved. Specific examples of the oxazoline group-containing compound include compounds having an oxazoline group, such as 2,2'-bis(2-oxazoline), 2,2'-ethylene-bis(4,4'-dimethyl-2-oxazoline), 2,2'-p-phenylene-bis(2-oxazoline), and bis(2-oxazolinylcyclohexane)sulfide, and an oxazoline group-containing polymer. Such compounds can be used singly or in combinations of two or more thereof. In particular, an oxazoline group-containing polymer is preferable in terms of handleability.

Examples of a commercially available product of the oxazoline group-containing polymer include Epocros series manufactured by Nippon Shokubai Co., Ltd. With being described with reference to trade names, more specific examples include water-soluble types "WS-500" and "WS-700"; and emulsion types "K-1010E", "K-1020E", "K-1030E", "K-2010E", "K-2020E", and "K-2030E".

In the present invention, the resin layer preferably contains a polyvinyl alcohol from the viewpoint of an enhancement in releasability. The polyvinyl alcohol is not particularly limited, and examples include a fully or partially saponified product of a vinyl ester polymer. The polyvinyl alcohol, when contained in the resin layer, thus exerts the effect of enhancing close contact properties of the resin layer and the substrate film and enhancing releasability of the resin layer from an adherend. The polyvinyl alcohol, when used in combination with the crosslinking agent, thus forms fine protrusions on the surface of the resin layer, and therefore the resin layer is remarkably enhanced in ease of slipping. The polyvinyl alcohol in the present invention preferably has water solubility for the purpose of use as a liquid material, as described below.

The polyvinyl alcohol preferably has a degree of saponification of 99% or less, more preferably 98% or less, further preferably 95% or less from the viewpoints of surface smoothness of the resin layer and releasability in a high-temperature region.

The average degree of polymerization of the polyvinyl alcohol is not particularly limited, can fall within, for example, the range from 300 to 5000, and is preferably 300 to 2000 from the viewpoint of an enhancement in stability of a coating liquid for formation of the resin layer.

Examples of a commercially available polyvinyl alcohol include specific trade names "JC-05", "JT-05", "JP-15", "VC-10", "ASC-05X", and "UMR-10HH" of "J-Poval" from Japan Vam & Poval Co., Ltd.; specific trade names "PVA-103" and "PVA-105" of "Kuraray Poval", and specific trade names "AQ4104" and "HR3010" of "Exceval", from Kuraray Co., Ltd.; and specific trade names "PC-1000" and "PC-2000" of "Denka Poval" from Denka Co., Ltd.

When the polyvinyl alcohol is contained, the content of the polyvinyl alcohol is preferably 5 parts by mass or more per 100 parts by mass of the acid-modified polyolefin resin from the viewpoint of releasability in a high-temperature region. The content is preferably 1000 parts by mass or less in order that stability of a liquid material for resin layer formation is favorably kept to hardly cause any coating spot. The lower limit of the content of the polyvinyl alcohol is more preferably 10 parts by mass or more, further preferably 20 parts by mass or more per 100 parts by mass of the acid-modified polyolefin resin. The upper limit is more preferably 500 parts by mass or less, further preferably 300 parts by mass or less.

In the present invention, while the resin layer may also contain an inorganic particle and/or an organic particle as a roughening substance, such a roughening substance is not necessarily needed to be contained. In general, for example, an inorganic particle of calcium carbonate, magnesium carbonate, calcium oxide, zinc oxide, magnesium oxide, silicon oxide, silicate soda, aluminum hydroxide, iron oxide, zirconium oxide, barium sulfate, titanium oxide, tin oxide, antimony trioxide, carbon black, molybdenum disulfide, or the like, and/or an organic particle of an acrylic crosslinked polymer, a styrene-based crosslinked polymer, a silicone resin, a fluororesin, a benzoguanamine resin, a phenol resin, a nylon resin, polyethylene wax, or the like are/is often added in order to impart slipping properties to the film. Addition of such an inorganic particle, however, unfortunately has the problems of generation and/or sedimentation of a coarse particle due to particle aggregation in a water dispersion liquid, and dropping of a particle from the resin layer surface. Such an inorganic particle is preferably 0.5 parts by mass or less, more preferably 0.1 parts by mass or less per 100 parts by mass of the acid-modified polyolefin resin, and, particularly preferably, is not contained. On the other hand, addition of such an organic particle allows for a remarkable enhancement in slipping properties of the film, but unfortunately has the problem of bleeding out of such an organic particle to the interface between polyester serving as a substrate and the resin layer, and to the resin layer surface, resulting in degradation of close contact properties of the resin layer and the substrate, and/or contamination of an adherend in peeling. Therefore, the content of the organic particle is preferably 0.5 parts by mass or less, more preferably 0.1 parts by mass or less per 100 parts by mass of the acid-modified polyolefin resin, and the organic particle is particularly preferably not contained.

In the present invention, the surface roughness of the resin layer surface is not particularly limited, the arithmetic average height Sa is preferably 0.001 to 0.100 $\mu$m, and the Sa is more preferably 0.001 to 0.050 $\mu$m, further preferably 0.001 to 0.030 $\mu$m in an application where flatness of the resin layer surface is demanded. When the surface roughness of the resin layer falls within the range, an uneven shape is less transferred to an adherend surface from which a mold release sheet is peeled.

In the present invention, the thickness of the resin layer is preferably 0.01 to 1 $\mu$m, more preferably 0.03 to 0.7 $\mu$m, further preferably 0.05 to 0.5 $\mu$m. If the thickness of the resin layer is less than 0.01 $\mu$m, sufficient releasability is not obtained. If the thickness is more than 1 $\mu$m, not only releasability is saturated and is not improved, but also the residual adhesion rate of an adherend may be reduced.

In the present invention, the resin layer can be industrially simply obtained by a manufacturing method where the semi-aromatic polyamide resin film serving as a substrate is coated with a liquid material containing the acid-modified polyolefin resin and the crosslinking agent in a liquid medium, and the resultant is then dried. The liquid medium is preferably an aqueous medium.

In the present invention, the aqueous medium forming the liquid material means a solvent which contains water and an amphipathic organic solvent and in which the content of water is 2% by mass or more, and may be only water. The amphipathic organic solvent refers to an organic solvent where the solubility of water in such an organic solvent at 20°C is 5% by mass or more (the solubility of water in an organic solvent at 20°C is described in, for example, a literature such as "Solvent Handbook" (Kodansha Scientific Ltd., vol. 10, 1990)). Specifically, examples can include not only alcohols such as methanol, ethanol, n-propanol, and isopropanol, ethers such as tetrahydrofuran and 1,4-dioxane, ketones such as acetone and methyl ethyl ketone, and esters such as methyl acetate, n-propyl acetate, isopropyl acetate, methyl propionate, ethyl propionate, and dimethyl carbonate, but also ammonia, organic amine compounds such as diethylamine, triethylamine, diethanolamine, triethanolamine, N,N-dimethylethanolamine, N,N-diethylethanolamine, and N-diethanolamine, and lactams such as 2-pyrrolidone and N-methyl-2-pyrrolidone.

An antioxidant, an ultraviolet absorber, a lubricant, a colorant, and the like can also be added to the liquid material as long as performance of the liquid material is not impaired.

The liquid material containing the acid-modified polyolefin resin and the crosslinking agent can be obtained by, for example, mixing a liquid material of the acid-modified polyolefin resin with the crosslinking agent or an aqueous solution of the crosslinking agent, and the liquid material of the acid-modified polyolefin resin can be an aqueous dispersion. The method of providing the aqueous dispersion is not particularly limited, and examples include a method described in International Publication No. WO 02/055598.

With respect to the dispersion particle size of the acid-modified polyolefin resin in the aqueous medium, the number average particle size is preferably 1 $\mu$m or less, more preferably 0.8 $\mu$m or less from the viewpoint of stability in mixing with other component and storage stability after the mixing. Such a particle size can be achieved by a manufacturing method described in WO 02/055598. Herein, the number average particle size of the acid-modified polyolefin resin is measured by a dynamic light scattering method.

The solid content of the aqueous dispersion is not particularly limited, and is preferably 1 to 60% by mass, more preferably 5 to 30% by mass in order that viscosity of the aqueous dispersion is properly kept.

The solid content of the liquid material obtained by mixing the aqueous dispersion with the crosslinking agent or the aqueous solution of the crosslinking agent can be appropriately selected depending on stacking conditions, objective thickness and performance, and the like, and is not particularly limited. The solid content, however, is preferably 2 to 30% by mass, more preferably 3 to 20% by mass in order that viscosity of the liquid material is properly kept and a uniform resin layer is formed.

Examples of the method of coating the substrate with the liquid material can include known methods such as gravure roll coating, reverse roll coating, wire bar coating, lip coating, air knife coating, curtain flow coating, spray coating, dip coating, and brush coating methods.

Coating may be applied to the film after stretching or the film before stretching, or coating can also be made immediately before a stretching machine, and drying and film formation can also be made in a pre-heating zone of the stretching machine.

Next, the method of manufacturing the semi-aromatic polyamide resin film will be described.

In manufacturing of the semi-aromatic polyamide resin film, the semi-aromatic polyamide resin, or the semi-aromatic polyamide resin to which an additive is compounded is melt-extruded by an extruder, and a molten polymer is discharged in the form of a sheet through a flat die such as a T die or an I die, and brought into contact with and cooled by a cooling surface of a travelling cooling member such as a cooling roll or a steel belt, thereby providing an unstretched sheet.

The extrusion temperature is here preferably equal to or higher than the melting point (Tm) of the semi-aromatic polyamide resin and equal to or lower than 370°C. If the extrusion temperature is equal to or lower than the melting point, the viscosity may be increased to make extrusion impossible. If the temperature is higher than 370°C, the semi-aromatic polyamide resin may be decomposed.

The temperature of the travelling cooling member is preferably 40 to 120°C, more preferably 45 to 90°C, further preferably 45 to 60°C. In general, polyamide is high in crystallization speed, and is gradually cooled to result in growth of a crystal and thus is made difficult to stretch. Therefore, polyamide is commonly rapidly cooled to around room temperature in order that an enhancement in cooling efficiency and suppression of dew condensation of water droplets on the travelling cooling member are simultaneously satisfied.

If the temperature of the travelling cooling member is higher than 120°C, the time taken until the molten polymer exhibits proper hardness on the travelling cooling member is elongated, thereby causing the unstretched sheet to be hardly removed from the travelling cooling member. As a result, for example, when the travelling cooling member is a roll, the unstretched sheet is fractured and thus wrapped to the roll, or, even if not fractured, is wrinkled due to impulse in removal of the unstretched sheet from the roll. Alternatively, the unstretched sheet is unevenly stretched and/or is difficult to stretch because crystals varied in the size are generated in the unstretched sheet.

If the semi-aromatic polyamide resin is rapidly cooled by the travelling cooling member at lower than 40°C, a portion of the molten polymer, not still brought into contact with the travelling cooling member (cooling roll), is hardened, and such a portion hardened is not closely contacted with the travelling cooling member (cooling roll). As a result, a portion of the unstretched sheet, closely contacted with the travelling cooling member, and a portion of the unstretched sheet, not closely contacted with the travelling cooling member are generated, and no stable operation can be made. Moreover, fracturing or ununiform stretching is caused in a subsequent stretching step. The reason for this is considered because not only resin properties including a high crystallization speed, but also resin properties including a high glass transition temperature (Tg), and furthermore high elastic modulus and hardness in a low-temperature region interfere with uniform close contact with the travelling cooling member, and cause a local variation in the cooling rate.

In order to uniformly cooling and solidifying the molten polymer to provide the unstretched sheet, a method such as an air knife casting method, an electrostatic application method, or a vacuum chamber method can be used as the method of cooling and solidifying the molten polymer with being closely contacted with the travelling cooling member.

While the resulting unstretched sheet usually has a thickness of about 10 μm to 3 mm and has excellent characteristics such as low water-absorption properties and chemical resistance, even as it is, the resulting unstretched sheet is further enhanced in low water-absorption properties, chemical resistance, heat resistance, and mechanical strength when biaxially stretched to a thickness of about 0.5 μm to 1.5 mm.

As the biaxial stretching method, a flat type successive biaxial stretching method, a flat type simultaneous biaxial stretching method, a tubular method, or the like can be used. In particular, a flat type simultaneous biaxial stretching method is optimum because the film thickness accuracy is favorable and physical properties in the film width direction are uniform.

As the stretching apparatus for a flat type simultaneous biaxial stretching method, a screw-type tenter, a pantagraph-type tenter, a linear-motor-driven clip-type tenter, or the like can be used.

The stretching ratio preferably falls within the range from 1.5 to 10-fold, more preferably 2 to 5-fold in both the machine direction (MD) and the transverse direction (TD) in order that a semi-aromatic polyamide resin film to be finally obtained is excellent in heat resistance and mechanical strength.

With respect to the stretching rate, the stretching strain rates in MD and TD are each preferably more than 400%/min, more preferably 800 to 12000%/min, more preferably 1200 to 6000%/min. If the strain rate is 400%/min or less, crystal growth is caused during stretching, to fracture the film. On the contrary, if the strain rate is too high, the unstretched sheet cannot follow deformation and may be fractured.

The stretch temperature is preferably equal to or higher than the Tg of the semi-aromatic polyamide resin, more preferably higher than the Tg and (Tg + 50)°C or lower. If the stretch temperature is lower than the Tg, the film is easily fractured and stable manufacturing cannot be performed. On the contrary, if the Tg is higher than (Tg + 50)°C, the variation in stretching may be caused.

The semi-aromatic polyamide resin film, after being stretched as described above, is preferably, if necessary, subjected to a heat fixation treatment with the film being gripped by a clip used in the stretching. The heat fixation treatment temperature is preferably 250 to (Tm - 5)°C, more preferably 280 to (Tm - 10)°C. If the heat fixation treatment temperature is lower than 250°C, the resin layer containing the acid-modified olefin resin, provided on the semi-aromatic polyamide resin film before the stretching, is insufficient in terms of a curing reaction, and is degraded in releasability.

Furthermore, the film, after being subjected to the heat fixation treatment, is preferably, if necessary, subjected to a relaxation treatment by 1 to 10%, more preferably a relaxation treatment by 3 to 7%, with the film being gripped by the clip. The film is subjected to such a relaxation treatment, thereby achieving sufficient dimension stability.

After the heat fixation treatment and/or the relaxation treatment are/is, if desired, performed, the film is cooled and wound by a winding roll, thereby providing a stretched film roll of the semi-aromatic polyamide resin. The resulting stretched film roll of the semi-aromatic polyamide resin can be slit at a desired width.

The procedure for stacking the resin layer on the semi-aromatic polyamide resin film manufactured by the method is not particularly limited, and preferably includes a step of coating the unstretched sheet of the semi-aromatic polyamide resin with the liquid material, and drying, stretching, and heat-treating the unstretched sheet coated with the liquid material. Thus, coating with the liquid material in a manufacturing process of the semi-aromatic polyamide resin film (in-line coating) can allow for coating of the resin layer in the state where the degree of orientation crystallization on the surface of the semi-aromatic polyamide resin film is low, thereby resulting in an enhancement in the close contact force of the semi-aromatic polyamide resin film and the resin layer. In addition, the resin layer can be heat-treated at a higher temperature in the state where the semi-aromatic polyamide resin film is strained, thereby resulting in enhancements in releasability of the resin layer and the residual adhesion force of an adherend without any degradation of the quality of the semi-aromatic polyamide resin film. Furthermore, not only a manufacturing process can be simplified, but also a cost advantage is given due to a reduction in the thickness of the resin layer, as compared with the case of off-line coating.

When a successive biaxial stretching method is adopted, it is preferable for the reason of simplicity and operating that the semi-aromatic polyamide resin film stretched in a uniaxial direction be coated with the liquid material and thereafter the semi-aromatic polyamide resin film be further stretched in a direction perpendicular to the above direction.

In the mold release sheet of the present invention, the peeling strength between the resin layer and an acrylic pressure-sensitive adhesive material as an adherend, after the resin layer and the acrylic pressure-sensitive adhesive material are heated and pressure-bonded, is preferably 2.5 N/cm or less, more preferably 1.8 N/cm or less, further preferably 1.6 N/cm or less.

The peeling strength from the pressure-sensitive adhesive material is preferably practically 2.5 N/cm or less for use as a mold release sheet.

In the mold release sheet of the present invention, the peeling strength between an epoxy prepreg after curing and the mold release sheet is preferably 0.01 to 1.5 N/cm, more preferably 0.01 to 1.0 N/cm, further preferably 0.02 to 0.8 N/cm, particularly preferably 0.05 to 0.5 N/cm. If the peeling strength is 0.01 N/cm or less, close contact properties between the mold release sheet and an adherend are insufficient, and therefore peeling can be caused in storing, cutting, and transporting steps. If the peeling strength is more than 1.5 N/cm, the peeling strength is so high that use as a mold release sheet is difficult. The peeling strength from the epoxy prepreg is measured after the epoxy prepreg is sandwiched with a pair of the mold release sheets, retained under a pressure of 15 kg/cm$^2$ at 150°C or 230°C for 70 minutes, and thus cured.

The mold release sheet of the present invention not only has heat resistance, but also includes a resin layer whose surface is favorable in releasability from various adherends. Therefore, various adherends can be stacked on the resin layer. Specifically, the mold release sheet can be suitably used as a pressure-sensitive adhesive material, a protection material such as a component for liquid crystal displays, a pressing process material of a printed wiring board, and a molding process material having a sheet-like structure.

Examples

Hereinafter, the present invention will be specifically described with reference to Examples.

The evaluation methods of various physical properties in Examples/Comparative Examples below were as follows. Unless particularly noted, all measurements were performed under an environment of a temperature of 20°C and a humidity of 65%.

<Evaluation methods>

1. Limiting viscosity [η] of semi-aromatic polyamide resin

The intrinsic viscosity (ηinh) of each of specimens having concentrations of 0.05, 0.1, 0.2, and 0.4 g/dl at 30°C in conc. sulfuric acid was determined from the following expression, and the value obtained by extrapolation of the intrinsic viscosity to a concentration of 0 was defined as the limiting viscosity [η].

$$\eta\text{inh = [ln (t1/t0)]/c}$$

In the expression, ηinh represents the intrinsic viscosity (dl/g), t0 represents the time (sec) of flow of a solvent, t1 represents the time (sec) of flow of a specimen solution, and c represents the specimen concentration (g/dl) in the solution.

2. Melting point (Tm) and glass transition temperature (Tg) of semi-aromatic polyamide resin

A DSC apparatus (DSC7 manufactured by PerkinElmer Co., Ltd.) was used to heat the semi-aromatic polyamide resin from 20°C to 350°C at 10°C/min and retain the resin for 5 minutes (1st Scan), and then cool the resin from 350°C to 20°C at 100°C/min and retain the resin for 5 minutes, under a nitrogen atmosphere. The glass transition temperature in the course of further re-heating from 20°C to 350°C at 10°C/min (2nd Scan) was defined as the Tg of the semi-aromatic polyamide resin. Similarly, the peak top temperature of a crystal melting peak observed in 2nd Scan was defined as the Tm.

3. Solid content of liquid material

The solid content was determined by weighing a proper amount of the liquid material, and heating the liquid material until the mass of the residue (solid) at 150°C was constant.

4. Surface roughness Sa (arithmetic average height)

Talysurf CCI6000 manufactured by TAYLOR/Hobson was used to measure the surface roughness Sa (arithmetic average height, μm) at 10 points under the following conditions, thereby determining the average.
Measurement length: 0.66 mm × 0.66 mm
Cut-off: robust gaussian filter, 0.25 mm

5. Peeling strength to acrylic pressure-sensitive adhesive tape

An acrylic pressure-sensitive adhesive tape (No. 31B/acrylic pressure-sensitive adhesive manufactured by Nitto Denko Corporation) having a width of 50 mm and a length of 150 mm was pressure-bonded onto the resin layer of the resulting mold release sheet by a rubber roll, thereby providing a specimen. The specimen was sandwiched as follows: metal plate/rubber plate/specimen/rubber plate/metal plate; and the resultant was left to still stand under a load of 2 kPa in an atmosphere at 70°C for 30 days, and thereafter cooled back to ordinary temperature, thereby providing a peeling strength measurement specimen. The peeling strength between the acrylic pressure-sensitive adhesive tape and the mold release sheet in the peeling strength measurement specimen was measured in a constant temperature room at 25°C by a tensile tester (precision universal material tester, Model 2020 manufactured by Intesco Co., Ltd.). The peeling angle was 180° and the peeling rate was 300 mm/min.

6. Residual adhesion rate

The acrylic pressure-sensitive adhesive tape (No. 31B/acrylic pressure-sensitive adhesive manufactured by Nitto Denko Corporation) having a width of 50 mm and a length of 150 mm, peeled from the surface of the mold release sheet in the peeling strength test, was attached onto a surface of a biaxially stretched polyester resin film ("Emblet PET-12" manufactured by Unitika Ltd., thickness: 12 μm), subjected to a corona treatment, and the resultant was left to still stand under a load of 2 kPa at room temperature for 20 hours. Thereafter, the peeling strength between the acrylic pressure-sensitive adhesive tape and the biaxially stretched polyester resin film was measured in a constant temperature room at 25°C by a tensile tester (precision universal material tester, Model 2020 manufactured by Intesco Co., Ltd.). The peeling angle was 180° and the peeling rate was 300 mm/min. The peeling strength obtained by the measurement was defined as F1.

On the other hand, an acrylic pressure-sensitive adhesive tape (No. 31B/acrylic pressure-sensitive adhesive manufactured by Nitto Denko Corporation) not used was attached onto a surface of a biaxially stretched polyester resin film ("Emblet PET-12" manufactured by Unitika Ltd., thickness: 12 μm) having a width of 50 mm and a length of 150 mm, subjected to a corona treatment, and the resultant was left to still stand under a load of 2 kPa at room temperature for 20 hours. Thereafter, the peeling strength between the acrylic pressure-sensitive adhesive tape and the biaxially stretched polyester resin film was measured in a constant temperature room at 25°C by a tensile tester (precision universal material tester, Model 2020 manufactured by Intesco Co., Ltd.) (the peeling angle was 180° and the peeling rate was 300 mm/min), and the resulting peeling strength was defined as F2.

The residual adhesion rate was obtained from the peeling strengths F1 and F2 obtained, according to the following expression.

$$\texttt{Residual adhesion rate (\%) = (F1/F2)} \times \texttt{100}$$

If the pressure-sensitive adhesive surface of the acrylic pressure-sensitive adhesive tape is contaminated by the mold release sheet, the acrylic pressure-sensitive adhesive tape is degraded in pressure-sensitive re-adhesiveness, and is impaired in performance as the pressure-sensitive adhesive tape. In other words, the residual adhesion rate is preferably high, preferably practically 85% or more.

7. Peeling strength to epoxy prepreg

Both surfaces of an epoxy prepreg (EI-6765 manufactured by Sumitomo Bakelite Co., Ltd.) having a size of 60 mm × 100 mm were sandwiched between the resulting mold release sheets, and the resultant was heated from 30°C to 150°C at 15°C/min and retained at 150°C for 70 minutes with application of a pressure of 5 kg/cm$^2$ for 10 minutes and then a pressure of 15 kg/cm$^2$, in a vacuum pressing machine at 1.07 kPa (8 Torr). Thereafter, the resultant was cooled to room temperature, thereby providing a sample.

The peeling strength between the epoxy prepreg after curing and the mold release sheet in the resulting sample was measured in a constant temperature room at 25°C by a tensile tester (precision universal material tester, Model 2020 manufactured by Intesco Co., Ltd.). The peeling angle was 180° and the peeling rate was 300 mm/min.

The peeling strength to the epoxy prepreg was preferably practically 1.5 N/cm or less, more preferably 1.0 N/cm or less.

8. Peeling strength to epoxy prepreg after high-temperature treatment

Both surfaces of an epoxy prepreg (EI-6765 manufactured by Sumitomo Bakelite Co., Ltd.) having a size of 60 mm × 100 mm were sandwiched between the resulting mold release sheets, and the resultant was heated from 30°C to 150°C at 15°C/min and retained at 150°C for 22 minutes, and thereafter further heated to 230°C at 5°C/min and retained at 230°C for 70 minutes with application of a pressure of 5 kg/cm$^2$ for 10 minutes and then a pressure of 15 kg/cm$^2$, in a vacuum pressing machine at 1.07 kPa (8 Torr). Thereafter, the resultant was cooled to room temperature, thereby providing a sample.

The peeling strength between the epoxy prepreg after curing and the mold release sheet in the resulting sample was measured in a constant temperature room at 25°C by a tensile tester (precision universal material tester, Model 2020 manufactured by Intesco Co., Ltd.). The peeling angle was 180° and the peeling rate was 300 mm/min.

9. Close contact properties of resin layer and substrate

The mold release sheet was subjected to an aging treatment at 70°C for 20 hours, and then cooled to ordinary temperature. The resin layer of the mold release sheet was evaluated with respect to close contact properties of the resin layer and the substrate film by a cross cutting method according to JIS K-5600-5-6. Herein, a case of a proportion of grids not peeled, of "100/100", was rated as the best state of no grids peeled, and a case of a proportion of grids not peeled, of "0/100", was rated as the worst state of all grids peeled. A case where the proportion was "100/100" to "90/100" was defined as passing, and the proportion was preferably "100/100" to "95/100", most preferably "100/100".

A semi-aromatic polyamide resin was manufactured by the following method.

<Nylon 9T>

A reaction vessel was loaded with 3289 parts by mass of terephthalic acid (TA), 2533 parts by mass of 1,9-nonanediamine (NDA), 633 parts by mass of 2-methyl-1,8-octanediamine (MODA), 48.9 parts by mass of benzoic acid (BA), 6.5 parts by mass of sodium hypophosphite monohydrate (0.1% by mass based on the total amount of the four raw materials of polyamide) and 2200 parts by mass of distilled water, and purged with nitrogen. The molar ratio of the raw materials (TA/BA/NDA/MODA) was 99/2/80/20.

After the contents of the reaction vessel were stirred at 100°C for 30 minutes, the internal temperature was raised to 210°C over 2 hours. The inside of the reaction vessel was pressurized to a pressure of 2.12 MPa (22 kg/cm$^2$). After the reaction was continued for 1 hour as it was, the temperature was raised to 230°C, and thereafter the reaction was allowed to run for 2 hours while the temperature was kept at 230°C and the pressure was kept at 2.12 MPa (22 kg/cm$^2$) with steam being gradually drained. Next, the pressure was dropped to 0.98 MPa (10 kg/cm$^2$) over 30 minutes, and the reaction was allowed to run for additional 1 hour, thereby providing a prepolymer. The prepolymer was dried at a temperature of 100°C under reduced pressure for 12 hours, and thereafter ground to a size of 2 mm or less.

Next, the prepolymer ground was subjected to solid-state polymerization under conditions of a temperature of 230°C and a pressure of 13.3 Pa (0.1 mmHg) for 10 hours, thereby providing a polymer. The polymer was fed to a twin-screw extruder ("TEX44C" manufactured by The Japan Steel Works, Ltd.), and melt-kneaded and extruded under a condition of a cylinder temperature of 320°C, and cooled and cut, thereby manufacturing a pellet of nylon 9T.

<Nylon 10T>

A reaction vessel was loaded with 489 parts by mass of terephthalic acid (TA), 507 parts by mass of 1,10-decanediamine (DDA), 2.8 parts by mass of benzoic acid (BA), 1.0 part by mass of sodium hypophosphite monohydrate (0.1% by mass based on the total amount of the three raw materials of polyamide) and 1000 parts by mass of distilled water, and purged with nitrogen. The molar ratio of the raw materials (TA/BA/DDA) was 99/2/100.

After the contents of the reaction vessel were stirred at 80°C and at 28 rpm for 0.5 hours, it was heated to 230°C. Thereafter, the content was heated at 230°C for 3 hours. Thereafter, the content was cooled and a reaction product was taken out.

The reaction product was ground, and then heated in a dryer at 220°C for 5 hours and subjected to solid-state polymerization under a nitrogen stream, thereby providing a polymer. The polymer was fed to a twin-screw extruder ("TEX44C" manufactured by The Japan Steel Works, Ltd.), and melt-kneaded and extruded under a condition of a cylinder temperature of 320°C, and cooled and cut, thereby manufacturing a pellet of nylon 10T.

The melting point, the glass transition temperature, and the limiting viscosity of the semi-aromatic polyamide resin manufactured are shown in Table 1.

[Table 1]

| Semi-aromatic polyamide resin | Molar ratio of raw materials of semi-aromatic polyamide resin | | | | | Physical properties | | |
| --- | --- | --- | --- | --- | --- | --- | --- | --- |
| | Acid component | | Amine component | | | | | |
| | Terephthalic acid (TA) | Benzoic acid (BA) | 1,9-Nonanediamine (NDA) | 2-Methyl-1,8-octanediamine (MODA) | 1,10-Decanediamine (DDA) | Limiting viscosity $[\eta]$ (dl/g) | Melting point (°C) | Glass transition temperature (°C) |
| Nylon 9T | 99 | 2 | 80 | 20 | 0 | 1.17 | 290 | 125 |
| Nylon 10T | 99 | 2 | 0 | 0 | 100 | 1.24 | 316 | 150 |

An aqueous dispersion of an acid-modified polyolefin resin, for preparation of a liquid material for resin layer formation, was manufactured by the following method.

<Manufacturing of aqueous dispersion O-1 of acid-modified polyolefin resin P-1>

A stirrer equipped with a sealable, pressure resistant glass container having a volume of 1 L, provided with a heater, was used, and the glass container was charged with 60.0 g of acid-modified polyolefin resin P-1 (Bondine LX-4110 manufactured by Arkema S.A., ethylene/ethyl acrylate/maleic anhydride = 91.0/7.0/2.0 (% by mass), MFR: 5 g/10 minutes, melting point: 107°C, Vicat softening temperature: 83°C), 90.0 g of isopropanol (IPA), 3.0 g of N,N-dimethylethanolamine (DMEA, 1.0-fold equivalent to a carboxyl group of a maleic anhydride unit in the resin), and 147.0 g of distilled water. Stirring was conducted for 60 minutes at a rotation speed of a stirring blade, of 300 rpm, and at a system temperature kept at 140 to 145°C. Thereafter, the resultant was immersed in a water bath and cooled to room temperature (about 25°C) under stirring with the rotation speed being still 300 rpm. Thereafter, the aqueous medium was partially distilled off at a bath temperature of 80°C by use of a rotary evaporator with water being added, for the purpose of removal of the organic solvent from the aqueous medium. Thereafter, the resultant was cooled to room temperature (25°C) by air cooling, and thereafter filtered under pressure (air pressure: 0.2 MPa) by a 300-mesh stainless filter (wire diameter: 0.035 mm, plain weave). Thus, milky white, uniform aqueous dispersion O-1 (solid content: 20% by mass, IPA: 0% by mass, DMEA: 0.9% by mass) of the acid-modified polyolefin resin was obtained. The number average particle size was 80 nm.

<Manufacturing of aqueous dispersions O-2 and O-5 of acid-modified polyolefin resins P-2 and P-5>

A glass container having a volume of 2 L, equipped with a stirrer and a heater, was charged with 75 g of an ethylene-methacrylic acid copolymer (AN42115C manufactured by Du Pont-Mitsui Polychemicals Co., Ltd., ethylene/methacrylic acid = 95.0/5.0 (% by mass)) as acid-modified polyolefin resin P-2 or an ethylene-methacrylic acid copolymer (N0903HC manufactured by Du Pont-Mitsui Polychemicals Co., Ltd., ethylene/methacrylic acid = 91.0/9.0 (% by mass)) as acid-modified polyolefin resin P-5, 175 g of n-propanol, 20 g of DMEA, and 230 g of distilled water. Stirring was conducted at a rotation speed of a stirring blade, of 300 rpm, and thus a suspension where no precipitate of a resin particulate material was observed at the bottom of the container was confirmed. With such a suspension being then kept, the power source of the heater was turned on after 10 minutes to conduct heating. The suspension was then stirred for additional 120 minutes and thus formed into a dispersion, with the system temperature being kept at 150°C. Thereafter, the resultant was cooled to about 80°C under stirring with the rotation speed being still 300 rpm, then 200 g of water was added and thereafter the system was gradually depressurized for removal of n-propanol and water. After 350 g or more of n-propanol and water in total was removed and then the system temperature reached 35°C, water was added to adjust the concentration of the acid-modified polyolefin resin in the aqueous dispersion to 20% by mass, and the resultant was filtered under pressure by a 180-mesh stainless filter, thereby providing milky white, uniform aqueous dispersion O-2 of acid-modified polyolefin resin P-2 and milky white, uniform aqueous dispersion O-5 of acid-modified polyolefin resin P-5, respectively.

<Manufacturing of aqueous dispersion O-3 of acid-modified polyolefin resin P-3>

After 280 g of a propylene-butene-ethylene terpolymer (Vestoplast 708 manufactured by Evonik Industries AG, propylene/butene/ethylene = 64.8/23.9/11.3 (% by mass)) was heated and molten in a four-necked flask under a nitrogen atmosphere, 25.0 g of maleic anhydride as an unsaturated carboxylic acid and 6.0 g of dicumyl peroxide as a radical generator were each added over 1 hour under stirring with the system temperature being kept at 170°C, and thereafter the reaction was allowed to run for 1 hour. After completion of the reaction, the resulting reaction product was loaded into a large amount of acetone, thereby precipitating a resin. The resin was further washed with acetone several times to remove an unreacted maleic anhydride, and thereafter dried under reduced pressure in a depressurized dryer, thereby providing acid-modified polyolefin resin P-3 (propylene/butene/ethylene/maleic anhydride = 61.6/22.7/10.7/5.0 (% by mass), MFR: 50 g/10 minutes, melting point: 135°C).

A stirrer equipped with a sealable, pressure resistant glass container having a volume of 1 L, provided with a heater, was used, the glass container was charged with 60.0 g of the acid-modified polyolefin resin, 45.0 g of ethylene glycol-n-butyl ether (Bu-EG), 6.9 g of DMEA (1.0-fold equivalent to a carboxyl group of a maleic anhydride unit in the resin), and 188.1 g of distilled water, and stirring was conducted at a rotation speed of a stirring blade, of 300 rpm. Thus, a suspension where no precipitate of the resin was observed at the bottom of the container was confirmed. With such a suspension being then kept, the power source of the heater was turned on after 10 minutes to conduct heating. The suspension was then stirred for additional 60 minutes with the system temperature being kept at 140°C. Thereafter, the resultant was cooled to room temperature (about 25°C) by air cooling under stirring with the rotation speed being still 300 rpm. Thereafter, the aqueous medium was partially distilled off at a bath temperature of 80°C by use of a rotary evaporator with water being added, for the purpose of removal of the organic solvent from the aqueous medium. Thereafter, the resultant was cooled to room temperature (25°C) by air cooling, and thereafter filtered under pressure (air pressure: 0.2 MPa) by a 300-mesh stainless filter (wire diameter: 0.035 mm, plain weave), thereby providing milky white, uniform aqueous dispersion O-3 (solid content: 20% by mass, Bu-EG: 0% by mass, DMEA: 1.0% by mass) of the acid-modified polyolefin resin. The number average particle size was 100 nm. Herein, there was almost no residual resin on the filter.

<Manufacturing of aqueous dispersion O-4 of acid-modified polyolefin resin P-4>

An aqueous dispersion was manufactured with a propylene-maleic anhydride copolymer (Yumex 1001 manufactured by Sanyo Chemical Industries, Ltd., propylene/maleic anhydride = 97.5/2.5 (% by mass)) used as acid-modified polyolefin resin P-4, according to the following method.

A glass container having a volume of 2 L, equipped with a stirrer and a heater, was charged with 75 g of acid-modified polyolefin resin P-4, 200 g of tetrahydrofuran, 8 g of DMEA, and 217 g of distilled water. Stirring was conducted at a rotation speed of a stirring blade, of 300 rpm, and thus a suspension where no precipitate of a resin particulate material was observed at the bottom of the container was confirmed. With such a suspension being then kept, the power source of the heater was turned on after 10 minutes to conduct heating. The suspension was then stirred for additional 120 minutes and thus formed into a dispersion, with the system temperature being kept at 130°C. Thereafter, the dispersion was cooled to about 80°C under stirring with the rotation speed being still 300 rpm, and then the system was gradually depressurized for removal of tetrahydrofuran and water. After 280 g or more of tetrahydrofuran and water in total was removed and then the system temperature reached 35°C, water was added to adjust the concentration of acid-modified polyolefin resin P-4 in the aqueous dispersion to 20% by mass, and the resultant was filtered under pressure by a 180-mesh stainless filter, thereby providing white uniform aqueous dispersion O-4 of the acid-modified polyolefin resin.

<Aqueous dispersion O-6 of acid-modified polyolefin resin P-6>

A glass container having a volume of 1 L, equipped with a stirrer and a heater, was charged with 75 g of an ethylene-methacrylic acid copolymer (N1560 manufactured by Du Pont-Mitsui Polychemicals Co., Ltd., ethylene/methacrylic acid = 85.0/15.0 (% by mass)) as acid-modified polyolefin resin P-6, 50 g of IPA, 7 g of DMEA, and 368 g of distilled water. Stirring was conducted at a rotation speed of a stirring blade, of 300 rpm, and thus a suspension where no precipitate of a resin particulate material was observed at the bottom of the container was confirmed. With such a suspension being then kept, the power source of the heater was turned on after 10 minutes to conduct heating. The suspension was then stirred for additional 120 minutes and thus formed into a dispersion, with the system temperature being kept at 130°C. Thereafter, the dispersion was cooled to about 80°C under stirring with the rotation speed being still 300 rpm, and then the system was gradually depressurized for removal of IPA and water. After 130 g or more of IPA and water in total was removed and then the system temperature reached 35°C, water was added to adjust the concentration of acid-modified polyolefin resin P-6 in the aqueous dispersion to 20% by mass, and the resultant was filtered under pressure by a 180-mesh stainless filter, thereby providing milky white, uniform aqueous dispersion O-6 of the acid-modified polyolefin resin.

<Aqueous dispersion O-7 of acid-modified polyolefin resin P-7>

After 280 g of a propylene-butene-ethylene terpolymer (Vestoplast 708 manufactured by Evonik Industries AG, propylene/butene/ethylene = 64.8/23.9/11.3 (% by mass)) was heated and molten in a four-necked flask under a nitrogen atmosphere, 10.0 g of maleic anhydride as an unsaturated carboxylic acid and 8.0 g of dicumyl peroxide as a radical generator were each added over 1 hour under stirring with the system temperature being kept at 170°C, and thereafter the reaction was allowed to run for 1 hour. After completion of the reaction, the resulting reaction product was loaded into a large amount of acetone, thereby precipitating a resin. The resin was further washed with acetone several times to remove an unreacted maleic anhydride, and thereafter dried under reduced pressure in a depressurized dryer, thereby providing acid-modified polyolefin resin P-7 (propylene/butene/ethylene/maleic anhydride = 63.6/23.5/11.1/1.8 (% by mass), MFR: 90 g/10 minutes, melting point: 135°C).

A stirrer equipped with a sealable, pressure resistant glass container having a volume of 1 L, provided with a heater, was used, the glass container was charged with 60.0 g of the acid-modified polyolefin resin, 45.0 g of Bu-EG, 2.0 g of DMEA (1.0-fold equivalent to a carboxyl group of a maleic anhydride unit in the resin), and 193.0 g of distilled water, and stirring was conducted at a rotation speed of a stirring blade, of 300 rpm. Thus, a suspension where no precipitate of the resin was observed at the bottom of the container was confirmed. With such a suspension being then kept, the power source of the heater was turned on after 10 minutes to conduct heating. The suspension was then stirred for additional 60 minutes with the system temperature being kept at 140°C. Thereafter, the resultant was cooled to room temperature (about 25°C) by air cooling under stirring with the rotation speed being still 300 rpm. Thereafter, the aqueous medium was partially distilled off at a bath temperature of 80°C by use of a rotary evaporator with water being added, for the purpose of removal of the organic solvent from the aqueous medium. Thereafter, the resultant was cooled to room temperature (25°C) by air cooling, and thereafter filtered under pressure (air pressure: 0.2 MPa) by a 300-mesh stainless filter (wire diameter: 0.035 mm, plain weave), thereby providing milky white, uniform aqueous dispersion of acid-modified polyolefin resin O-7 (solid content: 20% by mass, Bu-EG: 0% by mass, DMEA: 0.6% by mass). The number average particle size was 180 nm. Herein, there was almost no residual resin on the filter.

The configuration of each acid-modified polyolefin resin and the solid content in each aqueous dispersion are shown in Table 2.

[Table 2]

| Acid-modified polyolefin resin | | | | | | | Aqueous dispersion | |
|---|---|---|---|---|---|---|---|---|
| | Configuration (% by mass) | | | | | | | |
| Type | Olefin component | | | Ethylenically unsaturated component containing oxygen atom in side chain | Acid-modified component | | Type | Solid content (%) |
| | Ethylene | Propylene | Butene | Ethyl acrylate | Maleic anhydride | Methacrylic acid | | |
| P-1 | 91.0 | - | - | 7.0 | 2.0 | - | O-1 | 20 |
| P-2 | 95.0 | - | - | - | - | 5.0 | O-2 | 20 |
| P-3 | 10.7 | 61.6 | 22.7 | - | 5.0 | - | O-3 | 20 |
| P-4 | - | 97.5 | - | - | 2.5 | - | O-4 | 20 |
| P-5 | 91.0 | - | - | - | - | 9.0 | O-5 | 20 |
| P-6 | 85.0 | - | - | - | - | 15.0 | O-6 | 20 |
| P-7 | 11.1 | 63.6 | 23.5 | - | 1.8 | - | O-7 | 20 |

Example 1

<Preparation of liquid material>

Aqueous dispersion O-1 of acid-modified polyolefin resin P-1, an aqueous polyvinyl alcohol solution (VC-10 manufactured by Japan Vam & Poval Co., Ltd., average degree of polymerization: 1,000, solid content: 10% by mass, degree of saponification: 99.3% or more), and a solution of an oxazoline group-containing compound in water (Epocros WS-700 manufactured by Nippon Shokubai Co., Ltd, solid content: 25% by mass) were mixed so that the solid mass ratio of the components was 100:100:7, and thereafter the mixture was diluted with water, thereby providing a liquid material having a solid content of 8% by mass.

<Manufacturing of mold release sheet>

Nylon 9T was loaded into a 65-mm single-screw extruder set at cylinder temperatures of 295°C (front stage), 320°C (intermediate stage) and 320°C (rear stage), molten, and extruded through a T die set to 320°C to provide a sheet, and the sheet was pushed onto and thus closely contacted with a cooling roll set to a circulating oil temperature of 50°C according to an electrostatic application method, and cooled, thereby providing a substantially unoriented, unstretched sheet having a thickness of 240 $\mu$m. Herein, the surface of the cooling roll used was covered with ceramic ($Al_2O_3$) at a thickness of 0.15 mm. Two carbon brushes were arranged upstream to a contact point of the surface of the roll and a sheet, and brought into contact with the cooling roll, and holders of the carbon brushes were grounded, thereby neutralizing the surface of a ceramic cover layer. A tungsten wire having a diameter of 0.2 mm was used as an electrode, and a voltage of 6.5 kV was applied in a direct-current high-voltage generating device of 300 W (15 kV × 20 mA).

Next, one surface of the unstretched sheet was coated with the liquid material by a gravure roll so that the amount of the liquid material was 3.0 g/m$^2$, and thereafter the unstretched sheet was guided to a tenter type simultaneous biaxial stretching machine (manufactured by Hitachi Ltd.), with both ends of the sheet being each gripped by a clip, and simultaneously biaxially stretched at a pre-heating section temperature of 120°C, a stretching section temperature of 130°C, an MD stretching strain rate of 2400%/min, a TD stretching strain rate of 2760%/min, an MD stretching ratio of 3.0-fold, and a TD stretching ratio of 3.3-fold. The resultant was subjected to heat fixation at 285°C in the same tenter and to a relaxation treatment by 5% in the width direction of a film, and then uniformly gradually cooled, both ends of the film were each released from the clip, and edges were trimmed to wind a portion having a width of 0.5 m and a length of 500 m, thereby providing a mold release sheet where a resin layer having a thickness of 0.1 μm was provided on a nylon 9T film biaxially stretched, having a thickness of 25 μm.

Examples 2 to 18 and Comparative Examples 1 to 6

Each mold release sheet was obtained in the same manner as in Example 1 except that the types of the acid-modified polyolefin resin, the polyvinyl alcohol, and the crosslinking agent in the liquid material for resin layer formation, and the amounts of the polyvinyl alcohol and the crosslinking agent in terms of part(s) by mass per 100 parts by mass of the acid-modified polyolefin resin were changed as described in Tables 3 and 4.

Herein, JT-05 manufactured by Japan Vam & Poval Co., Ltd. (average degree of polymerization: 500, solid content: 10% by mass, degree of saponification: 94.0%) was used as polyvinyl alcohol JT-05 shown in the Tables, and Carbodilite E-02 (solid content: 40% by mass) manufactured by Nisshinbo Chemical Inc. was used as the carbodiimide group-containing compound of the crosslinking agent shown in the Tables. Moreover, nylon 10T was used instead of nylon 9T to manufacture a nylon 10T film in each of Examples 8 and 16, and Comparative Example 3, nylon 6T (Arlen manufactured by Mitsui Chemicals, Inc.) was used instead of nylon 9T to manufactured a nylon 6T film in Example 17, and nylon 11T (Rilsan HT CESV BLACK P010-HP-TL manufactured by Arkema S.A) was used instead of nylon 9T to manufacture a nylon 11T film in Example 18.

Example 19 and Comparative Examples 7 to 11

A nylon 9T film ("Uniamide" manufactured by Unitika Ltd., thickness: 25 μm) was used in Example 19, a polyimide film ("Apical AH" manufactured by Kaneka Corporation, thickness: 25 μm) was used in each of Comparative Examples 7 and 8, a polyphenylene sulfide film ("Torelina" manufactured by Toray Industries, thickness: 25 μm) was used in each of Comparative Examples 9 and 10, and a polyethylene terephthalate film ("Emblet" manufactured by Unitika Ltd., thickness: 25 μm) was used in Comparative Example 11. Each of the films was coated with a liquid material having each composition described in Tables 3 and 4 by use of a meyer bar, and dried at 280°C for 30 seconds, thereby providing a mold release sheet where a resin layer having a thickness of 0.1 μm was formed on each of the films.

The mold release sheets obtained in Examples 1 to 19 and Comparative Examples 1 to 11 were evaluated with respect to releasability. The results are shown in Tables 3 and 4.

[Table 3]

| | | Configuration of mold release sheet | | | | | | | | | Method of coating with liquid material for resin layer formation | Characteristics of mold release sheet | | | | | |
|---|---|---|---|---|---|---|---|---|---|---|---|---|---|---|---|---|---|
| | | Resin forming substrate film | Resin layer | | | | | | | | | | Smoothness | Releasability | | | | Close contact properties of substrate and resin layer |
| | | | Acid-modified polyolefin resin | | Crosslinking agent (parts by mass*) | | Polyvinyl alcohol | | | | | | Acrylic pressure-sensitive adhesive tape | | Epoxy prepreg | | |
| | | | | | | | | | | | Surface roughness Sa | 70°C | | 150°C | 230°C | |
| | | | Type | Proportion of acid-modified component | Oxazoline group-containing compound | Carbodiimide group-containing compound | Type | Degree of saponifica-tion | parts by mass* | | | Peeling strength | Residual adhesion rate | Peeling strength | Peeling strength | |
| | | | | % by mass | | | | % | | | μm | N/cm | % | N/cm | N/cm | |
| Example | 1 | 9T | P-1 | 2 | 7 | - | VC-10 | 99.3 | 100 | in-line | 0.034 | 1.12 | 91.3 | 0.28 | 1.28 | 98/100 |
| | 2 | 9T | P-1 | 2 | 7 | - | VC-10 | 99.3 | 500 | in-line | 0.038 | 1.28 | 87.0 | 0.24 | 1.19 | 97/100 |
| | 3 | 9T | P-1 | 2 | 7 | - | JT-05 | 94.0 | 100 | in-line | 0.028 | 1.21 | 89.2 | 0.22 | 1.15 | 97/100 |
| | 4 | 9T | P-1 | 2 | 7 | - | - | - | - | in-line | 0.025 | 1.41 | 86.3 | 0.34 | 1.45 | 94/100 |
| | 5 | 9T | P-1 | 2 | 1 | - | VC-10 | 99.3 | 100 | in-line | 0.035 | 1.95 | 87.0 | 0.32 | 1.42 | 92/100 |
| | 6 | 9T | P-1 | 2 | 50 | - | VC-10 | 99.3 | 100 | in-line | 0.034 | 2.01 | 86.1 | 0.30 | 1.39 | 97/100 |
| | 7 | 9T | P-1 | 2 | - | 7 | VC-10 | 99.3 | 100 | in-line | 0.036 | 1.14 | 88.8 | 0.35 | 1.30 | 97/100 |
| | 8 | 10T | P-1 | 2 | 7 | - | VC-10 | 99.3 | 100 | in-line | 0.039 | 1.07 | 87.5 | 0.29 | 1.23 | 93/100 |
| | 9 | 9T | P-2 | 5 | 7 | - | VC-10 | 99.3 | 100 | in-line | 0.037 | 1.14 | 91.3 | 0.41 | 1.48 | 98/100 |
| | 10 | 9T | P-3 | 5 | 7 | - | VC-10 | 99.3 | 100 | in-line | 0.052 | 1.69 | 88.2 | 0.19 | 0.74 | 97/100 |
| | 11 | 9T | P-3 | 5 | 7 | - | JT-05 | 94.0 | 100 | in-line | 0.044 | 1.79 | 87.0 | 0.10 | 0.45 | 98/100 |
| | 12 | 9T | P-4 | 2.5 | 7 | - | VC-10 | 99.3 | 100 | in-line | 0.053 | 1.85 | 87.4 | 0.11 | 0.37 | 98/100 |
| | 13 | 9T | P-4 | 2.5 | 7 | - | JT-05 | 94.0 | 100 | in-line | 0.041 | 1.84 | 88.3 | 0.11 | 0.32 | 99/100 |
| | 14 | 9T | P-4 | 2.5 | 7 | - | JT-05 | 94.0 | 500 | in-line | 0.050 | 1.99 | 85.9 | 0.09 | 0.26 | 96/100 |
| | 15 | 9T | P-4 | 2.5 | 7 | - | - | - | - | in-line | 0.040 | 1.92 | 86.1 | 0.13 | 0.45 | 95/100 |
| | 16 | 10T | P-4 | 2.5 | 7 | - | JT-05 | 94.0 | 100 | in-line | 0.051 | 1.81 | 88.2 | 0.15 | 0.49 | 96/100 |
| | 17 | 6T | P-4 | 2.5 | 7 | - | JT-05 | 94.0 | 100 | in-line | 0.049 | 1.89 | 86.1 | 0.37 | 1.23 | 93/100 |
| | 18 | 11T | P-4 | 2.5 | 7 | - | JT-05 | 94.0 | 100 | in-line | 0.052 | 1.88 | 85.8 | 0.32 | 1.31 | 90/100 |
| | 19 | 9T | P-4 | 2.5 | 7 | - | JT-05 | 94.0 | 100 | off-line | 0.043 | 1.82 | 87.1 | 0.25 | 1.25 | 95/100 |

* Amount (parts by mass) per 100 parts by mass of acid-modified polyolefin resin

[Table 4]

| | | Configuration of mold release sheet | | | | | | | | Characteristics of mold release sheet | | | | | |
|---|---|---|---|---|---|---|---|---|---|---|---|---|---|---|---|
| | | Resin forming substrate film | Resin layer | | | | | | Method of coating with liquid material for resin layer formation | Smoothness | Releasability | | | | Close contact properties of substrate and resin layer |
| | | | Acid-modified polyolefin resin | | Crosslinking agent (parts by mass*) | | Polyvinyl alcohol | | | | Acrylic pressure-sensitive adhesive tape | | Epoxy prepreg | | |
| | | | | | | | | | | | 70°C | | 150°C | 230°C | |
| | | | Type | Proportion of acid-modified component | Oxazoline group-containing compound | Carbodiimide group-containing compound | Type | Degree of saponification | parts by mass* | | Surface roughness Sa | Peeling strength | Residual adhesion rate | Peeling strength | Peeling strength | |
| | | | | % by mass | | | | % | | | μm | N/cm | % | N/cm | N/cm | |
| Comparative Example | 1 | 9T | P-5 | 9 | 7 | - | VC-10 | 99.3 | 100 | in-line | 0.033 | 1.35 | 86.8 | 0.31 | 1.82 | 97/100 |
| | 2 | 9T | P-5 | 9 | 7 | - | - | - | - | in-line | 0.027 | 1.48 | 87.9 | 0.43 | 1.93 | 97/100 |
| | 3 | 10T | P-5 | 9 | 7 | - | VC-10 | 99.3 | 100 | in-line | 0.047 | 1.42 | 87.0 | 0.46 | 2.12 | 98/100 |
| | 4 | 9T | P-6 | 15 | 7 | - | VC-10 | 99.3 | 100 | in-line | 0.031 | 1.51 | 88.3 | 0.32 | 2.45 | 96/100 |
| | 5 | 9T | P-7 | 1.8 | 7 | - | VC-10 | 99.3 | 100 | in-line | 0.055 | 2.80 | 79.4 | 0.16 | 1.73 | 77/100 |
| | 6 | 9T | P-4 | 2.5 | - | - | JT-05 | 94.0 | 100 | in-line | 0.038 | Breakage due to aggregation | - | 1.12 | Breakage due to aggregation | 30/100 |
| | 7 | PI | P-4 | 2.5 | 7 | - | JT-05 | 94.0 | 100 | off-line | 0.048 | 3.52 | 25.2 | 1.38 | 2.21 | 24/100 |
| | 8 | PI | P-1 | 2 | 7 | - | VC-10 | 99.3 | 100 | off-line | 0.040 | 2.89 | 41.4 | 1.55 | 2.65 | 48/100 |
| | 9 | PPS | P-4 | 2.5 | 7 | - | JT-05 | 94.0 | 100 | off-line | 0.055 | 3.61 | 22.5 | 1.33 | 2.35 | 26/100 |
| | 10 | PPS | P-1 | 2 | 7 | - | VC-10 | 99.3 | 100 | off-line | 0.049 | 2.95 | 40.6 | 1.70 | 2.73 | 44/100 |
| | 11 | PET | P-1 | 2 | 7 | - | VC-10 | 99.3 | 100 | off-line | 0.038 | 1.29 | 88.1 | 0.08 | Unmeasurable | 95/100 |

* Amount (parts by mass) per 100 parts by mass of acid-modified polyolefin resin

Each of the mold release sheets of Examples 1 to 19, where the substrate was the semi-aromatic polyamide resin film, and the resin layer contained the acid-modified polyolefin resin having a proportion of the acid-modified component of 2 to 6% by mass and the crosslinking agent, thus exhibited excellent close contact properties of the resin layer with the semi-aromatic polyamide resin film as the substrate, exhibited favorable releasability from an adherend, and was also favorable in the residual adhesion rate of a pressure-sensitive adhesive component after releasing. Furthermore, such mold release sheets also exhibited favorable releasability even in the peeling test conducted after the high-temperature treatment.

In particular, the resin layer containing each of propylene-based, acid-modified polyolefin resins (P-3, P-4) was favorable in releasability from an epoxy prepreg, and particularly the resin layer containing acid-modified polyolefin resin (P-4) having a high propylene ratio was most excellent in releasability after the high-temperature treatment. The resin layer containing each of ethylene-based, acid-modified polyolefin resins (P-1, P-2) had a low surface roughness Sa and was smooth, and was favorable in releasability from an acrylic pressure-sensitive adhesive.

The resin layer, when containing polyvinyl alcohol, was more enhanced in close contact properties with the substrate and releasability from an adherend, and in particular, a resin layer containing JT-05 being a polyvinyl alcohol having a low degree of saponification had a smoother surface and was more excellent in releasability in a high-temperature region of higher than 200°C, than a resin layer containing VC-10 having a high degree of saponification.

On the other hand, each of the mold release sheets of Comparative Examples 1 to 4, where the proportion of the acid-modified component in the resin layer forming the mold release sheet exceeded the upper limit defined in the present invention, was thus increased in peeling strength after the high-temperature treatment and degraded in releasability.

The mold release sheet of Comparative Example 5, where the proportion of the acid-modified component in the resin layer forming the mold release sheet was below the lower limit of the range defined in the present invention, was thus degraded in close contact properties of the resin layer and the substrate, and also inferior in releasability from an adherend.

The mold release sheet of Comparative Example 6, where no crosslinking agent was contained in the resin layer forming the mold release sheet, was thus inferior in close contact properties of the resin layer and the substrate, and could not be released and was broken due to aggregation in evaluation of releasability from an adherend.

Each of the mold release sheets of Comparative Examples 7 and 8, where the resin forming the substrate film was polyimide (PI), and each of the mold release sheets of Comparative Examples 9 and 10, where the resin forming the substrate film was polyphenylene sulfide (PPS), thus were low in close contact properties with the resin layer, and inferior in releasability from an adherend.

The mold release sheet of Comparative Example 11, where the resin forming the substrate film was polyethylene terephthalate (PET), thus caused deformation of the film in the high-temperature treatment and could not be evaluated with respect to releasability.

Each of the mold release sheets of Comparative Examples 6 to 10 was inferior in releasability in the peeling test after the high-temperature treatment.

## Claims

1. A mold release sheet comprising a resin layer provided on a semi-aromatic polyamide resin film, wherein the semi-aromatic polyamide resin forming the semi-aromatic polyamide resin film is a resin formed from an aromatic dicarboxylic acid component and an aliphatic diamine component, and the resin layer contains an acid-modified polyolefin resin having a proportion of an acid-modified component of 2 to 6% by mass, and a crosslinking agent.

2. The mold release sheet according to claim 1, wherein the content of the crosslinking agent per 100 parts by mass of the acid-modified polyolefin resin is 1 to 50 parts by mass.

3. The mold release sheet according to one of claims 1 and 2, where the crosslinking agent is a carbodiimide group-containing compound and/or an oxazoline group-containing compound.

4. The mold release sheet according to any one of claims 1 to 3, wherein the semi-aromatic polyamide resin not only comprises a dicarboxylic acid component containing terephthalic acid as a main component, but also comprises a diamine component containing an aliphatic diamine having 4 to 15 carbon atoms, as a main component.

5. The mold release sheet according to claim 4, wherein the semi-aromatic polyamide resin is nylon 9T or nylon 10T.

6. The mold release sheet according to any one of claims 1 to 5, wherein the resin layer further contains polyvinyl alcohol.

**7.** The mold release sheet according to claim 6, wherein the content of the polyvinyl alcohol per 100 parts by mass of the acid-modified polyolefin resin is 5 parts by mass or more.

**8.** The mold release sheet according to one of claims 6 and 7, wherein the polyvinyl alcohol has a degree of saponification of 99% or less.

## Patentansprüche

**1.** Formtrennfolie, die eine Harzschicht umfasst, die auf einem Film aus halbaromatischem Polyamidharz bereitgestellt ist, wobei das halbaromatische Polyamidharz, das den Film aus halbaromatischem Polyamidharz bildet, ein aus einer aromatischen Dicarbonsäurekomponente und einer aliphatischen Diaminkomponente gebildetes Harz ist und die Harzschicht ein säuremodifiziertes Polyolefinharz enthält, dessen säuremodifizierte Komponente einen Anteil von 2 bis 6 Massen-% ausmacht, sowie ein Vernetzungsmittel.

**2.** Formtrennfolie nach Anspruch 1, wobei der Gehalt an Vernetzungsmittel pro 100 Massenteile des säuremodifizierten Polyolefinharzes 1 bis 50 Massenteile beträgt.

**3.** Formtrennfolie nach einem der Ansprüche 1 und 2, wobei das Vernetzungsmittel eine Carbodiimidgruppen enthaltende Verbindung und/oder eine Oxazolingruppen enthaltende Verbindung ist.

**4.** Formtrennfolie nach einem der Ansprüche 1 bis 3, wobei das halbaromatische Polyamidharz nicht nur eine Terephthalsäure als Hauptbestandteil enthaltende Dicarbonsäurekomponente umfasst, sondern auch eine ein aliphatisches Diamin mit 4 bis 15 Kohlenstoffatomen als Hauptbestandteil enthaltende Diaminkomponente umfasst.

**5.** Formtrennfolie nach Anspruch 4, wobei das halbaromatische Polyamidharz Nylon 9T oder Nylon 10T ist.

**6.** Formtrennfolie nach einem der Ansprüche 1 bis 5, wobei die Harzschicht ferner Polyvinylalkohol enthält.

**7.** Formtrennfolie nach Anspruch 6, wobei der Gehalt an Polyvinylalkohol pro 100 Massenteile des säuremodifizierten Polyolefinharzes 5 Massenteile oder mehr beträgt.

**8.** Formtrennfolie nach einem der Ansprüche 6 und 7, wobei der Polyvinylalkohol einen Verseifungsgrad von 99 % oder weniger aufweist.

## Revendications

**1.** Feuille de démoulage comprenant une couche de résine disposée sur un film de résine de polyamide semi-aromatique, dans laquelle la résine de polyamide semi-aromatique formant le film de résine de polyamide semi-aromatique est une résine formée à partir d'un composant acide dicarboxylique aromatique et d'un composant diamine aliphatique, et la couche de résine contient une résine de polyoléfine modifiée par un acide ayant une proportion de composant modifié par un acide de 2 à 6 % en masse, et un agent de réticulation.

**2.** Feuille de démoulage selon la revendication 1, dans lequel la teneur en l'agent de réticulation pour 100 parties en masse de la résine de polyoléfine modifiée par un acide est de 1 à 50 parties en masse.

**3.** Feuille de démoulage selon l'une des revendications 1 et 2, dans laquelle l'agent de réticulation est un composé contenant un groupe carbodiimide et/ou un composé contenant un groupe oxazoline.

**4.** Feuille de démoulage selon l'une quelconque des revendications 1 à 3, dans laquelle la résine de polyamide semi-aromatique non seulement comprend un composant acide dicarboxylique contenant de l'acide téréphtalique en tant que composant principal, mais aussi comprend un composant diamine contenant une diamine aliphatique ayant de 4 à 15 atomes de carbone en tant que composant principal.

**5.** Feuille de démoulage selon la revendication 4, dans laquelle la résine de polyamide semi-aromatique est le nylon 9T ou le nylon 10T.

**6.** Feuille de démoulage selon l'une quelconque des revendications 1 à 5, dans laquelle la couche de résine contient en outre du poly(alcool vinylique).

**7.** Feuille de démoulage selon la revendication 6, dans laquelle la teneur en le poly(alcool vinylique) pour 100 parties en masse de la résine de polyoléfine modifiée par un acide est de 5 parties en masse ou plus.

**8.** Feuille de démoulage selon l'une quelconque des revendications 6 et 7, dans laquelle le poly(alcool vinylique) a un degré de saponification de 99 % ou moins.

## REFERENCES CITED IN THE DESCRIPTION

### Patent documents cited in the description

- WO 2009025063 A
- JP 2014091763 A
- WO 02055598 A

### Non-patent literature cited in the description

- Solvent Handbook. Kodansha Scientific Ltd, 1990, vol. 10